# EUROPÄISCHE PATENTANMELDUNG

(11) **EP 0 579 128 A1**
(43) Veröffentlichungstag der Anmeldung: **19.01.1994**
(21) Anmeldenummer: 93110991.2
(22) Anmeldetag: 09.07.1993
(51) Int. Cl.: B29C 49/28, B29C 49/42, B29C 31/04

(54) **Blasformmaschine für die Herstellung von aus Kunststoff bestehenden Hohlkörpern**

(30) Priorität: 17.07.1992 DE 4223484
(71) Anmelder: BEKUM Maschinenfabriken GmbH, D-12107 Berlin (DE)
(72) Erfinder: Stroh,Karl Heinz, D 14195 Berlin (DE)
(74) Vertreter: Huss, Carl-Hans, Dipl.-Ing.

(57) **Zusammenfassung**

Die Erfindung betrifft eine Maschine für die Herstellung von Hohlkörpern aus Kunststoffen mit mehreren im Winkel zueinander liegenden Achsen. Es wird eine einfach aufgebaute Maschine offenbart, die bei einem Ausstoß des Vorformlings senkrecht nach unten das exakte Einlegen desselben in die in mehreren Achsen verlaufende Formmulde einer geteilten Form erlaubt, ohne daß diese bzw. der untere, sich dem ausgepreßten Vorformling darbietende Teil derselben bewegt werden muß. Hierzu wird vorgeschlagen, bei einer Maschine mit einer eine geteilte Blasform 8,8' tragenden und die Formteile zur Blasform schließenden oder zum Öffnen auseinanderfahrenden Formschließeinheit 3 mit einem unteren Formteil 8' und einem auf Führungsholmen 6,6' verschiebbaren oberen Formteil 8 sowie einem Extruder 28 mit angeschlossenem, einen Schlauch senkrecht abwärts auspressenden Schlauchkopf 29, wobei der Extruder in zwei zueinander senkrecht stehenden Richtungen horizontal verschiebbar gelagert ist, daß der Schlauchkopf 29 um eine Achse 22 am Extruder 28 schwenkbar gelagert und die Formschließeinheit 3 mit feststehendem unteren Formteil 8' auf einem schräg liegenden Tisch 2 mit fixer Schrägstellung montiert ist.

## Beschreibung

Für die Herstellung von Hohlkörpern aus Kunststoffen im Blasverfahren wird in der Regel das feste pulverförmige oder körnige Ausgangsmaterial in einem Extruder (oder für die Herstellung mehrschichtiger Hohlkörper in mehreren Extrudern) durch Druck und Wärme erweicht und in einem an die Mündung des Extruders angeschlossenen Blas- oder Schlauchkopf in einen Hohlstrang umgeformt. Dieser wird senkrecht nach unten zwischen die auseinandergefahrenen Teile einer in vertikaler Ebene geteilten Blasform gefahren und nach dem Schließen der Formteile im Formnest der Blasform zum Hohlkörper gewünschter Gestalt ausgeblasen. Mit dieser Methode können nicht nur rotationssymmetrische Hohlkörper ausgeformt werden, aber doch nur solche mit verhältnismäßig geringen Abweichungen von einer Hauptsymmetrieachse. Als Beispiel seien Kannen, z.B. Gießkannen mit einem Handgriff, genannt. Dagegen müssen besondere Maßnahmen ergriffen werden, wenn Hohlkörper mit mehreren, im Winkel zueinander liegenden Achsen hergestellt werden sollen, z.B. mehrfach oder wellenförmig gekrümmte Rohrstücke. Diese können drei und mehr Achsen aufweisen und werden heutzutage vielfach in der Industrie, z.B. Kraftfahrzeugindustrie, verwendet. Hierzu schlägt z.B. die EP 0 256 442 B1 vor, das Schließgestell einer Blasmaschine mit den Formträgern und den an diesen befestigten Hälften der vertikal geteilten Blasform mit dem Motor für das Auseinander- und Zusammenfahren derselben um eine außerhalb der Mittelachse des Schließgestellrahmens liegende waagerechte Achse zu kippen und gleichzeitig den das Schließgestell tragenden Rahmen in der waagerechten X- und Y-Achse zu verschieben. Bei einer erweiterten Ausführungsform der in EP 0 256 442 B1 beschriebenen und dargestellten Maschine kann auch eine Formhälfte gegenüber der anderen parallel verschoben, d.h. auf- und heruntergefahren werden. Durch das Kippen der für die Aufnahme des schlauchförmigen Vorformlings bestimmten einen Formhälfte in unterschiedliche Winkelstellungen und das Hin- und Hersowie Vor- und Zurückfahren des Schließgestells und gegebenenfalls durch Höhenverschiebung dieser Formhälfte gegenüber der anderen, kann sie dem aus dem Blaskopf austretenden Schlauchstück, entsprechend gesteuert, so dargeboten werden, daß ein in bestimmter Richtung des Formnestes verlaufendes Formnestteilstück bestimmte Schlauchteilstücke ohne Achsabweichung aufnimmt. Diese Ausführung hat aber den Nachteil, daß sie verhältnismäßig kompliziert aufgebaut ist, da viele schwere Teile bewegt werden müssen, und daß unterhalb des Schließgestells kein oder wenig Platz verbleibt. Das Einführen des Blasmediums in den im Formnest liegenden Vorformling und gegebenenfalls das sogenannte "Kalibrieren", d.h. die Festlegung einer hinsichtlich der lichten Weite bestimmten Halsöffnung des geblasenen Hohlkörpers, geschieht in den meisten Fällen durch Einführen in den hier offenen Vorformling von oben. Es gibt aber auch von der Form und der Größe des herzustellenden Hohlkörpers abhängige Fälle, in denen eine Luftzuführung und/oder Kalibrierung von unten, d.h. ein Einführen eines Blasdornes in das unten liegende offene Vorformlingsende zweckmäßig erscheint, und in diesen Fällen wird es auch als nachteilig angesehen, wenn die den Blasdorn tragende und bewegende Einheit mit dem gesamten Schließgestell für das Kippen desselben bewegt werden muß.

Ein anderer Weg wurde bei der Konzeption einer Blasmaschine nach der DE 29 27 098 C2 eingeschlagen. Bei dieser ist die Form mit waagerechter Trennebene angeordnet und kann in ihrem Schließgestell neben dem Öffnen und Schließen als Ganzes nur in der Z-Achse bewegt, d.h. gehoben und abgesenkt werden. Die Bewegungen in der X- und Y-Achse werden durch Verschiebungen des Extruders mit angeschlossenem Blaskopf besorgt. Bei einer abgewandelten Ausführungsform wird die Bewegung in der Z-Achse nicht durch Heben und Senken des Schließgestells, sondern durch senkrechte Verschiebung des Blaskopfes gegenüber dem Extruder vollzogen. Während bei der erstgenannten Ausführung die waagerecht geteilte Form aufklappbar ist und damit die waagerecht liegende untere Formhälfte nach dem Abklappen der Oberhälfte für den Extruder zugänglich wird, wird bei der zweitgenannten Ausführungsform die untere waagerecht liegende Formhälfte auf gerader oder gekrümmter Bahn aus dem Bereich der senkrecht über ihr liegenden Formoberhälfte herausgefahren, um so dem bewegten Extruder mit Blaskopf zugänglich zu werden. Diese Vorrichtung hat den grundsätzlichen Nachteil, daß ein plastisch verformbarer, für das nachfolgende Aufblasen zum Hohlkörper geeigneter, waagerecht aus der Blaskopfdüse austretender schlauchförmiger Vorformling aus Kunststoff immer schwieriger als ein senkrecht nach unten aus der Düse des Blaskopfes ausgepreßter Schlauch zu handhaben und in ein Formnest einzuführen ist, eine Schwierigkeit, die bei Formnestern für mehrachsige Hohlkörper nur vergrößert werden kann. Bei einer Ausführung, bei der die unten waagerecht liegende Blasformhälfte auf einer gekrümmten Bahn, in der Regel einer Kreisbahn, bewegt und in einer Station gefüllt und in einer weiteren Station geschlossen wird, ist nachteilig, daß die Zeit, bis die obere Formhälfte auf die untere gebracht und damit die Form geschlossen wird, verhältnismäßig lang ist. Der Vorformling bleibt sozusagen in der unteren Formhälfte liegen und kühlt an der Berührungsfläche mit dem Fornmest mit zeitlicher Abhängigkeit ab, wodurch Probleme beim anschließenden Aufblasen eintreten können.

Damit lag der Erfindung die Aufgabe zugrunde, eine Maschine für die Herstellung mehrachsiger Hohlkörper aus Kunststoff mit verhältnismäßig einfachem Aufbau zu schaffen, die bei einem Ausstoß des Vorformlings senkrecht nach unten das exakte Einlegen desselben in die in mehreren Achsen verlaufende Formmulde einer geteilten Form erlaubt, ohne daß diese bzw. der untere, sich dem ausgepreßten Vorformling darbietende Teil derselben bewegt werden muß. Diese Aufgabe löst die Erfindung mit den in den Ansprüchen definierten Mitteln. Sie ist ohne Anspruch auf Vollständigkeit in der Zeichnung an einem Ausführungsbeispiel veranschaulicht und anhand desselben nachfolgend beschrieben. Es stellen, jeweils vereinfacht und schematisch sowie in wesentlich verkleinertem Maßstab, dar:
- Fig. 1: eine Vorderansicht der Maschine nach der Erfindung;
- Fig. 2: die Vorderansicht der zur Maschine gehörenden Extrudereinheit ohne Blaskopf und Schließgestell;
- Fig. 3: einen Schnitt durch den Gegenstand der Fig. 1, geschnitten längs der Linie III-III in Fig. 1.

Hauptteile der Maschine nach der Erfindung sind das Rahmengestell 1 mit Tisch 2 und Formschließeinheit 3 sowie die Extrudereinheit 4.

Die Formschließeinheit 3 besteht in an sich bekannter Weise aus den beiden auf dem Tisch befestigten Traversen 5,5', zwischen die Führungsholme 6,6' für die in Pfeilrichtung A-B verschiebbare Formtragplatte 7 eingespannt sind. Mit der Formtragplatte 7 kann eine Formhälfte 8 zum Formschluß auf die Formhälfte 8' zu- oder für das Formöffnen von ihr weggefahren werden. Hierzu kann die nicht bewegte Formhälfte 8' auf der Traverse 5' oder auf einer besonderen, mit der Traverse 5' verbundenen Formspannplatte befestigt sein. Zwischen der Traverse 5 und der Formtragplatte 7 ist ein hydraulischer oder pneumatischer Kolbenmotor 9 eingebaut, der bei Beaufschlagung mit seiner Kolbenstange 10 die Tragplatte 7 für den Formschluß in Pfeilrichtung B oder das Formöffnen in Pfeilrichtung A verschiebt.

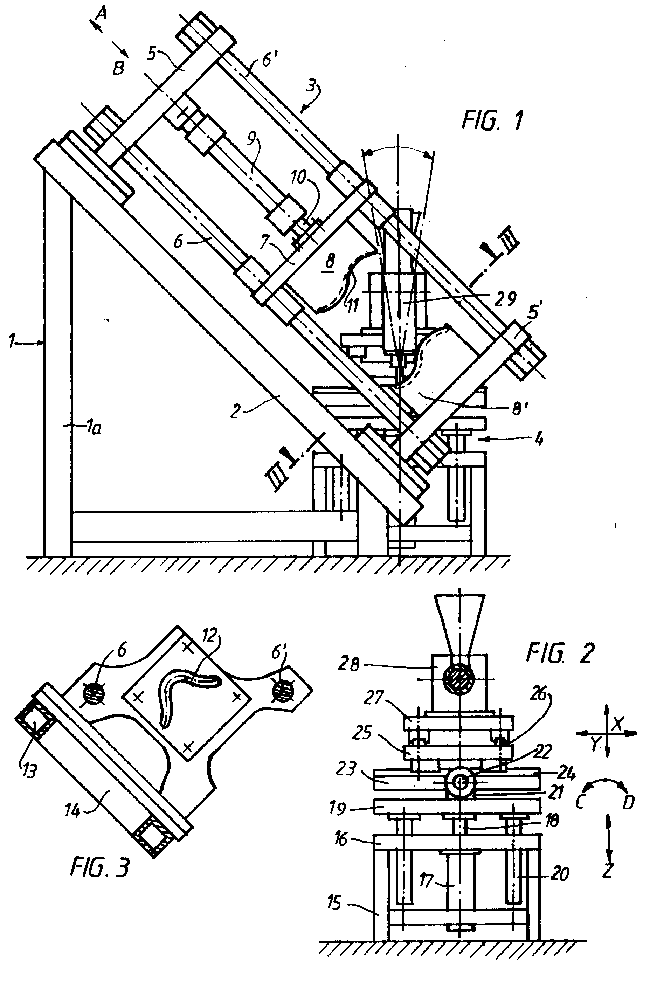

Die gekrümmte Oberfläche 11 in Fig. 1 und die Aufsicht auf das Formnest 12 in Fig. 3 veranschaulichen, daß der herzustellende Hohlkörper sowohl in einer Ebene (Formtrennebene) als auch in der zu dieser senkrecht stehenden Ebene mehrere zueinander im Winkel stehende Achsen aufweisen kann.

Erfindungsgemäß ist die Schließeinheit 3 auf dem aus den Längsträgern 13 und Querträgern 14 bestehenden Tisch 2 in fixer Schrägstellung montiert, wodurch auch die in ihrem geschlossenen Zustand die Form bildenden inneren, das Formnest aufweisenden Oberflächen nicht waagerecht und nicht senkrecht, sondern schräg liegen.

Alle für das richtige Einlegen eines Vorformlings in das Formnest 12 erforderlichen Bewegungen, bzw. Einrichtungen für das Ausführen dieser Bewegungen sind erfindungsgemäß in der Extrudereinheit 4 zusammengefaßt. Diese besteht hierzu aus dem Grundrahmen 15 mit Tisch 16. Ein am Tisch 16 befestigter Kolbenmotor 17 kann mit seiner Kolbenstange 18 einen Rahmen oder Tisch 19 mit Führungsholmen 20 heben und senken und so eine Bewegung "auf-ab" bzw. eine Bewegung des Extruders in der Z-Achse bewirken.

Auf dem Tisch 19 sind Lagerböcke 21 für eine Achse 22 des Tisches oder Rahmens 23 montiert, so daß der Tisch 23 und damit auch der Extruder um die Achse 22 gemäß dem gekrümmten Doppelpfeil C-D gekippt oder verschwenkt werden kann. Außerdem trägt der Tisch 23 Schienen 24 für die Verschiebung des darüber liegenden Tisches oder Rahmens 25 auf der Zeichnung von links nach rechts und umgekehrt, also in der Y-Achse, während der Tisch oder Rahmen 25 wiederum Schienen 26 für das Verfahren des obersten Tisches oder Rahmens 27 aufweist, mit der er in der Zeichnung vor und zurück, also in der X-Achse verfahren werden kann. Auf dem Tisch 27 ist der Extruder 28 mit Blaskopf 29 befestigt.

Damit kann der Extruder bzw. der an seinem Ende montierte, den Schlauch bildende und ausstoßende Blaskopf 29, in der X-Achse (vor- und zurück), der Y-Achse (hin-her) und Z-Achse (auf-ab) und zusätzlich in der Richtung C-D verfahren bzw. verschwenkt werden, wodurch die untere Blasformhälfte 8' bzw. das in ihr eingebettete Teilformnest 12 in allen nur denkbaren Richtungen und Ebenen für die Aufnahme des jeweils in den Formnestteil hinein gehörenden Schlauchteils gesteuert eingerichtet werden kann.

### Bezugszeichenaufstellung

- 1: Rahmengestell
- 2: Tisch
- 3: Formschließeinheit
- 4: Extrudereinheit
- 5: Traverse
- 6: Führungsholme
- 7: Formtragplatte
- 8: Formhälften
- 9: Kolbenmotor
- 10: Kolbenstange
- 11: gekrümmte Oberfläche (in 8)
- 12: Formnest
- 13: Längsträger
- 14: Querträger
- 15: Grundrahmen (in 4)
- 16: Tisch
- 17: Kolbenmotor
- 18: Kolbenstange
- 19: Tisch oder Rahmen
- 20: Führungsholm
- 21: Lagerböcke
- 22: Achsen
- 23: Tisch oder Rahmen
- 24: Schienen
- 25: Tisch oder Rahmen
- 26: Schienen
- 27: Tisch oder Rahmen
- 28: Extruder
- 29: Blaskopf

## Patentansprüche

1. Blasformmaschine zur Herstellung von aus Kunststoff bestehenden Hohlkörpern mit mehreren, in unterschiedlichen Winkeln zueinander stehenden und gegebenenfalls in unterschiedlichen Ebenen liegenden Achsen, mit einer eine geteilte Blasform (8,8') tragenden und die Formteile zur Blasform schließenden oder zum öffnen auseinanderfahrenden Formschließeinheit (3) mit einem unteren Formteil (8') und einem auf einer auf Führungsholmen (6,6') verschiebbaren, den oberen Formteil (8) tragenden Platte, sowie mit einem Extruder (28) mit angeschlossenem, einen Schlauch senkrecht abwärts auspressendem Schlauchkopf (29), wobei der Extruder in zwei zueinander senkrecht stehenden Richtungen horizontal verschiebbar gelagert ist, dadurch **gekennzeichnet,** daß der Schlauchkopf (29) um eine Achse (22) am Extruder (28) schwenkbar gelagert und die Formschließeinheit (3) mit feststehendem unteren Formteil auf einem schräg liegenden Tisch (2) mit fixer Schrägstellung montiert ist.

2. Maschine nach dem Anspruch 1, dadurch **gekennzeichnet,** daß der Extruder (28) auf einer aus übereinander angeordneten Tischen bestehenden Einheit (4) montiert ist, deren unterster Tisch (19) heb- und senkbar (Z-Achse) ist, deren darüber liegender Tisch (23) um eine parallel zur Extruderachse liegende Achse (22) verschwenkbar ist, deren über dem Tisch (23) liegender Tisch (25) auf dem Tisch (23) in der einen horizontalen Richtung (X-Achse) und deren oberster, den Extruder tragender Tisch (27) auf dem Tisch (25) in einer rechtwinklig zur X-Achse liegenden Richtung (Y-Achse) bewegbar angeordnet sind.

3. Maschine nach dem Anspruch 1, dadurch **gekennzeichnet,** daß die Schräge des die Formschließeinheit (3) tragenden Tisches (2) 40-60° zur Horizontalen beträgt.
